# EUROPEAN PATENT SPECIFICATION

(11) **EP 4 600 867 B1**
(45) Date of publication and mention of the grant of the patent: **22.04.2026**
(21) Application number: 24215744.4
(22) Date of filing: 27.11.2024
(51) Int. Cl.: G06N 3/0464, G06N 3/063, G06F 7/53, G06F 7/544, G06N 3/0495

(54) **CONVOLUTION PROCESSING METHOD AND ELECTRONIC APPARATUS PERFORMING THE SAME**
KONVOLUTIONSVERARBEITUNGSVERFAHREN UND ELEKTRONISCHE VORRICHTUNG ZUR DURCHFÜHRUNG DAVON
PROCÉDÉ DE TRAITEMENT DE CONVOLUTION ET APPAREIL ÉLECTRONIQUE LE METTANT EN UVRE

(30) Priority: 08.02.2024 KR 20240019510
(43) Date of publication of application: 13.08.2025
(73) Proprietor: Samsung Electronics Co., Ltd., Suwon-si, Gyeonggi-do 16677 (KR)
(72) Inventor: KIM, Ho Young, 16678 Gyeonggi-do (KR)
(74) Representative: Arnold & Siedsma

(56) References cited:
- US-B2- 11 740 870
- RAVEENDRAN SITHARA ET AL: "Inexact Signed Wallace Tree Multiplier Design Using Reversible Logic", IEEE ACCESS, IEEE, USA, vol. 9, 28 July 2021 (2021-07-28), pages 108119 - 108130, XP011870533, DOI: 10.1109/ACCESS.2021.3100892
- KAO HSU-YU ET AL: "Convolver Design and Convolve-Accumulate Unit Design for Low-Power Edge Computing", SENSORS, vol. 21, no. 15, 27 July 2021 (2021-07-27), CH, pages 5081, XP093276808, ISSN: 1424-8220, DOI: 10.3390/s21155081

## Description

### BACKGROUND

### 1. Field

The present disclosure relates to a convolution processing method and an electronic apparatus performing the convolution processing method.

### 2. Description of Related Art

A convolution neural network (CNN) may involve a significant amount of computations, so enhancing the energy efficiency of operations may be important. While some implementation may separate multiplication and addition for simplicity, this may not result in optimal energy efficiency. Raveendran Sithara et al. ("Inexact Signed Wallace Tree Multiplier Design Using Reversible Logic", IEEE ACCESS, IEEE, USA, vol. 9, pages 108119-108130, 28 July 2021, doi: 10.1109/ACCESS.2021.3100892) discloses an inexact Baugh-Wooley Wallace tree multiplier with novel architecture for inexact 4:2 compressor optimised for realisation using reversible logic. US11740870B2 discloses a Multiple Accumulate (MAC) hardware accelerator including a plurality of multipliers.

### SUMMARY

One or more embodiments may address at least the problems and/or disadvantages described above, and other disadvantages not described above.

In accordance with an aspect of the disclosure, a convolution processing method performed by at least one processor included in an electronic apparatus, includes: obtaining a plurality of partial sums by multiplying a plurality of input feature values in a binary form by a plurality of weight values in the binary form, wherein each partial sum is a result obtained by multiplying an input feature value and a bit of a corresponding weight value;predicting a bitwidth of a result of a convolution operation between the plurality of input feature values and the plurality of weight values;expanding a plurality of first partial sums from among the plurality of partial sums to obtain expanded first partial sums, by adding a plurality of first sequences to the plurality of first partial sums such that a length of each expanded first partial sum from among the plurality of expanded first partial sums matches the predicted bitwidth; wherein the plurality of first partial sums correspond to results obtained by multiplying each input feature value from among the plurality of input feature values by a sign bit corresponding to each weight value from among the plurality of weight values;inverting the expanded first partial sums to convert the plurality of first sequences into a plurality of second sequences and the plurality of first partial sums into a plurality of inverted first partial sums;generating a plurality of ones (" 1 s") by, for each inverted expanded first partial sum, generating a one corresponding to adding one to the inverted expanded first partial sum;determining additional bits comprising a sum of the second sequences and a sum of the plurality of ones (" 1 s"); and obtaining an output feature value by summing the inverted first partial sums, the additional bits, and, remaining partial sums other than the inverted first partial sums.

By using the method defined above, it is possible to efficiently conduct multiplication and addition operations in an operator that involves numerous multiplication operations, such as CONV or MATMUL, and the summation of the results of the multiplication operations

The output feature value may be obtained using a compressor tree circuit.

The remaining partial sums, the inverted first partial sums, and the additional bits may be included in an input of a first stage of the compressor tree circuit.

The method may further include: based on a bias being present, sign-extending the bias, wherein the output feature value may be obtained by summing, using the compressor tree circuit, the sign-extended bias, the remaining partial sums, the inverted first partial sums, and the additional bits.

The sign-extended bias, the remaining partial sums, the inverted first partial sums, and the additional bits may be included in a first stage of the compressor tree circuit.

The compressor tree circuit may include a plurality of first compressors and a plurality of second compressors, wherein each first compressor from among the plurality of first compressors may be configured to generate two outputs based on three inputs, and wherein each second compressor from among the plurality of second compressors may be configured to generate two outputs based on two inputs.

A remainder may be obtained by dividing a number of bits corresponding to a first place of a first stage, wherein based on the remainder being not equal to two ("2"), a number of the plurality of first compressors equal to a quotient obtained by dividing the number of bits by three ("3") may be used for the first place of the first stage, and based on the remainder being equal to two ("2"), at least one first compressor or at least one second compressor may be used.

Based on at least one from among a bias and a residual input being present in a convolution operation, the at least one from among the bias and the residual input may be processed by the compressor tree circuit.

In accordance with an aspect of the disclosure, an electronic apparatus includes: a memory; and at least one processor operatively connected to the memory and configured to: obtain a plurality of partial sums by multiplying a plurality of input feature values in a binary form by a plurality of weight values in the binary form, wherein each partial sum is a result obtained by multiplying an input feature value and a bit of a corresponding weight value,predict a bitwidth of a result of a convolution operation between the plurality of input feature values and the plurality of weight values,expand a plurality of first partial sums from among the obtained plurality of partial sums to obtain expanded first partial sums, by adding a plurality of first sequences to the plurality of first partial sums such that a length of each expanded first partial sum from among the plurality of expanded first partial sums matches the predicted bitwidth, wherein the plurality of first partial sums correspond to results obtained by multiplying each input feature value from among the plurality of input feature values by a sign bit corresponding to each weight from among the plurality of the weight values,invert the expanded first partial sums to convert the plurality of first sequences into a plurality of second sequences and the plurality of first partial sums into a plurality of inverted first partial sums,generate a plurality of ones ("1s") by, for each inverted expanded first partial sum, generating a one corresponding to adding one to the inverted expanded first partial sum; determine additional bits comprising a sum of the second sequences and a sum of the plurality of ones ("1s"), and obtain an output feature value by summing the inverted first partial sums, the additional bits, and remaining partial sums other than the inverted first partial sums.

The at least one processor may include a compressor tree circuit.

The remaining partial sums, the inverted first partial sums, and the additional bits may be included in an input of a first stage of the compressor tree circuit.

The at least one processor may be further configured to, based on a bias being present, sign-extend the bias and obtain the output feature value by summing, using the compressor tree circuit, the sign-extended bias, the remaining partial sums, the inverted first partial sums, and the additional bits.

The sign-extended bias, the remaining partial sums, the inverted first partial sums, and the additional bits may be included in a first stage of the compressor tree circuit.

A remainder may be obtained by dividing a number of bits corresponding to a first place of a first stage, the compressor tree circuit may include a plurality of first compressors and a plurality of second compressors, based on the remainder being not equal to two ("2"), a number of the plurality of first compressors equal to a quotient obtained by dividing the number of bits by three ("3") may be used for the first place of the first stage, and based on the remainder being equal to two ("2"), at least one first compressor or at least one second compressor may be used.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1A is a diagram illustrating a deep learning operation method using an artificial neural network (ANN), according to an embodiment;
FIG. 1B is a diagram illustrating a process of performing convolution processing (or a convolution operation) based on deep learning, according to an embodiment;
FIGS. 2 to 6 are diagrams illustrating convolution processing according to an embodiment;
FIGS. 7 to 9 are diagrams illustrating a compressor tree circuit according to an embodiment;
FIGS. 10 to 11 are diagrams illustrating an example of a method of configuring a compressor tree circuit according to an embodiment;
FIG. 12 is a diagram illustrating an example of an operation of an electronic apparatus when a bias or residual connection of convolution processing is present, according to an embodiment;
FIGS. 13A and 13B are block diagrams illustrating an electronic apparatus for performing convolution processing, according to an embodiment; and
FIG. 14 is a flowchart illustrating a convolution processing method of an electronic apparatus, according to an embodiment.

### DETAILED DESCRIPTION

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, or the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein may have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, some embodiments are described in detail with reference to the accompanying drawings. When describing the embodiments with reference to the accompanying drawings, like reference numerals refer to like elements and a repeated, redundant, or duplicative description related thereto may be omitted.

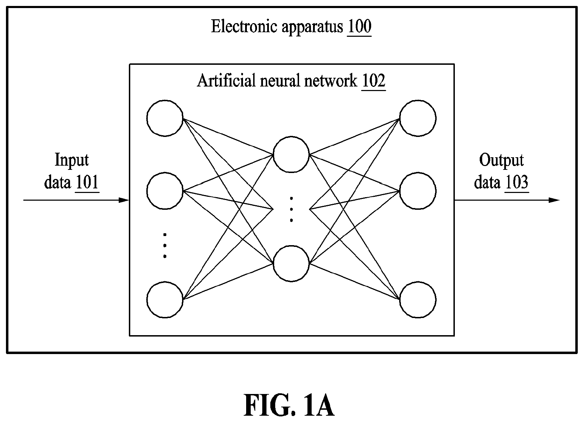

FIG. 1A is a diagram illustrating a deep learning operation method using an artificial neural network (ANN).

An artificial intelligence (AI) algorithm including deep learning or the like may involve inputting input data 101 to an ANN and learning output data 103 through an operation such as a convolution operation. The ANN may be a computational architecture that is modelled on a biological brain. In the ANN, nodes corresponding to neurons of a brain may be connected to each other and may collectively operate to process input data. Various types of neural networks may include, for example, a convolutional neural network (CNN), a recurrent neural network (RNN), a deep belief network (DBN), and a restricted Boltzmann machine (RBM), but embodiments are not limited thereto. In a feed-forward neural network, neurons may have links to other neurons. These links may extend in one direction, for example, a forward direction, through the neural network.

FIG. 1A illustrates a structure in which the input data 101 is input to an ANN 102 (e.g., a CNN) and the output data 103 is output through the ANN 102. The ANN 102 may be a deep neural network including two or more layers.

The CNN may be used to extract "features" such as a border and a line color from the input data 101. The CNN may include a plurality of layers. Each of the layers may receive data, process data input to a corresponding layer, and generate data that is to be output from the corresponding layer. The data output from the layer may be a feature map generated by performing a convolution operation between an image or feature map input to the CNN and a weight value of one or more filters. Initial layers of the CNN may operate to extract low-level features such as edges or gradients from an input. Subsequent layers of the CNN may operate to extract gradually more complex features such as an eye and a nose in an image.

According to an embodiment, an electronic apparatus 100 may include a processor (or for example an operation circuit) configured to implement the ANN 102. The electronic apparatus 100 may generate the output data 103 by processing the input data 101using the processor.

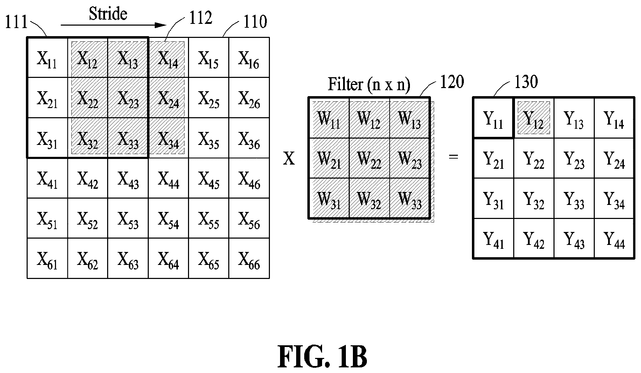

FIG. 1B is a diagram illustrating a process of performing convolution processing (which may be referred to as a convolution operation) based on deep learning.

Referring to FIG. 1B, the process of performing convolution processing in the ANN 102 may be a process of generating an output feature map 130 by performing multiplication and addition operations between an input feature map 110 and a filter 120 in layers to generate output values, and accumulating and summing the output values.

The convolution processing process may refer to a process of performing multiplication and addition operations by applying a filter having a predetermined size, for example a filter 120 having a size of n×n (where n is a natural number), to the input feature map 110 from an upper left side or corner to a lower right side or corner in a current layer. In the example shown in FIG. 1B, the process of performing a convolution operation using the filter 120 having a size of 3×3 is described. As described below, the filter 120 may correspond to 3×3 ×m (where m is a natural number). Here, m may represent the number of channels.

For example, first, an operation of multiplying 3×3 pieces of data in a first region 111 on the upper left side of the input feature map 110 by weights W₁₁ to W₃₃ of the filter 120, respectively, may be performed. Here, the 3×3 pieces of data in the first region 111 may include a total of nine pieces of data (or nine input feature values X₁₁ to X₃₃) including three pieces of data in a first direction and three pieces of data in a second direction. Thereafter, first-first piece of output data (or a first-first output feature value Y₁₁) in the output feature map 130may be generated using a cumulative sum of the output values of the multiplication operation, for example X₁₁*W₁₁, X₁₂*W₁₂, X₁₃*W₁₃, X₂₁*W₂₁, X₂₂*W₂₂, X₂₃*W₂₃, X₃₁*W₃₁, X₃₂*W₃₂, and X₃₃*W₃₃. Here, the symbol "*" may denote multiplication.

Thereafter, an operation may be performed by shifting the unit of data from the first region 111 to a second region 112 on the upper left side of the input feature map 110. In this example, the number of pieces of data shifted in the input feature map 110 for the convolution processing process may be referred to as a stride. The size of the output feature map 130 to be generated may be determined based on the stride. For example, when the stride is equal to one ("1"), first-second piece of output data (or a first-second output feature value Y₁₂) of the output feature map 130 may be generated by performing an operation of multiplying nine input feature values X₁₂ to X₃₄ included in the second region 112 by the weight values W₁₁ to W₃₃ of the filter 120 and accumulating and summing the output values of the multiplication operation, for example X₁₂*W₁₁, X₁₃*W₁₂, X₁₄*W₁₃, X₂₂*W₂₁, X₂₃*W₂₂, X₂₄*W₂₃, X₃₂*W₃₁, X₃₃*W₃₂, and X₃₄*W₃₃.

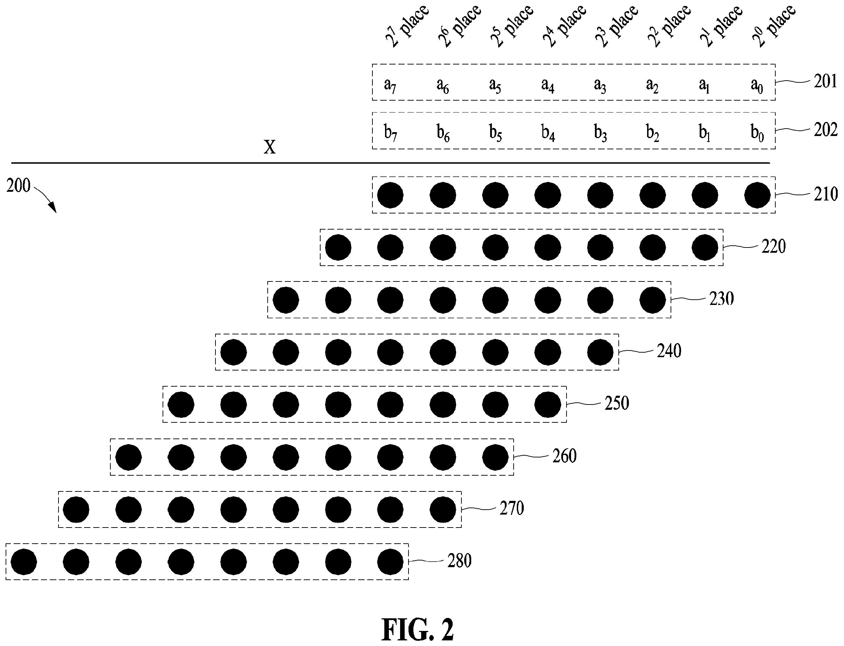

FIGS. 2 to 6 are diagrams illustrating convolution processing according to an embodiment.

FIG. 2 illustrates an example of a multiplication operation between an input feature value X₁₁ 201 and a weight value W₁₁ 202. The input feature value X₁₁ 201 may be a multiplicand of the multiplication operation. The weight value W₁₁ 202 may be a multiplier corresponding to the multiplication operation.

Although FIGS. 2 to 6 illustrate examples in which a filter may have a size of 3×3×16, embodiments are not limited thereto, and in some embodiments the filter may have any size.

In the example shown in FIG. 2, the input feature value X₁₁ 201 may be an unsigned eight-bit number, and the weight value W₁₁ 202 may be a signed eight-bit number. A most significant bit (MSB) b₇ of the weight value W₁₁ 202 may correspond to a sign bit. Although examples are described below in which the weight values may correspond to signed bits (e.g., signed eight-bit numbers, embodiments are not limited thereto, and the weight values may correspond to unsigned bits (e.g., unsigned eight-bit numbers). At least some or all of the description below may apply to embodiments in which the weight values include unsigned bits.

According to embodiments a bit value a₀ and a bit value b₀ may each be referred to as a bit in a 2⁰ place. For example, the bit value a₀ may be referred to a bit in the 2⁰ place of the input feature value X₁₁ 201, and the bit value b₀ may be referred to a bit in the 2⁰ place of the weight value W₁₁ 202. Similarly, a bit value a₁ and a bit value b₁ may each be referred to as a bit in a 2¹ place, a bit value a₂ and a bit value b₂ may each be referred to as a bit in a 2² place, and a bit value a₃ and a bit value b₃ may each be referred to as a bit in a 2³ place. In addition, a bit value a₄ and a bit value b₄ may each be referred to as a bit in a 2⁴ place, a bit value as and a bit value b₅ may each be referred to as a bit in a *2⁵* place, a bit value a₆ and a bit value b₆ may each be referred to as a bit in a 2⁶ place, and a bit value a₇ and a bit value b₇ may each be referred to as a bit in a 2⁷ place.

The electronic apparatus 100 may generate a plurality of multiplication results by multiplying the input feature value X₁₁ 201 by the weight value W₁₁ 202. For example, as shown in FIG. 2, the plurality of multiplication results may include eight multiplication results, each of which is illustrated as a row of solid black circles in FIG. 2. The sum of the plurality of multiplication results may correspond to X₁₁*W₁₁, so each multiplication result from among the plurality of multiplication results may be referred to as a partial sum. For example, as shown in FIG. 2, the plurality of multiplication results may include a partial sum 210, a partial sum 220, a partial sum 230, a partial sum 240, a partial sum 250, a partial sum 260, a partial sum 270, and a partial sum 280..

According to embodiments, a partial sum 210 may correspond to a result obtained by multiplying the input feature value X₁₁ 201 by the bit b₀ of the weight value W₁₁ 202, a partial sum 220 may correspond to the result obtained by multiplying the input feature value X₁₁ 201 by the bit b₁ of the weight value W₁₁ 202, a partial sum 230 may correspond to the result obtained by multiplying the input feature value X₁₁ 201 by the bit b₂ of the weight value W₁₁ 202, and a partial sum 240 may correspond to the result obtained by multiplying the input feature value X₁₁ 201 by the bit b₃ of the weight value W₁₁ 202. Similarly, a partial sum 250 may correspond to the result obtained by multiplying the input feature value X₁₁ 201 by the bit b₄ of the weight value W₁₁ 202, a partial sum 260 may correspond to the result obtained by multiplying the input feature value X₁₁ 201 by the bit b₅ of the weight value W₁₁ 202, a partial sum 270 may correspond to the result obtained by multiplying the input feature value X₁₁ 201 by the bit b₆ of the weight value W₁₁ 202, and a partial sum 280 may correspond to the result obtained by multiplying the input feature value X₁₁ 201 by the bit b₇ of the weight value W₁₁ 202.

The electronic apparatus 100 may predict the bitwidth of the result of a convolution operation between the input feature values X₁₁ to X₃₃ and the weight values of the 3×3×16 filter. For example, an input feature value may be represented by an unsigned eight-bit number, and a weight value may be represented by a signed eight-bit number. The result obtained by multiplying a single input feature value by a single weight value according to this example may correspond to a maximum of sixteen bits. The sum of 144 (, e.g., 3×3×16) multiplication results may correspond to the result of the convolution operation between the input feature values X₁₁ to X₃₃ and the weight values of the 3×3×16 filter. Accordingly, the result of the convolution operation between the input feature values X₁₁ to X₃₃ and the weight values of the 3×3×16 filter may be about twenty-four bits. The electronic apparatus 100 may predict that the bitwidth of the result of the convolution operation between the input feature values X₁₁ to X₃₃ and the weight values of the 3×3×16 filter is twenty-four bits. According to an implementation, the electronic apparatus 100 may predict that the bitwidth of the result of the convolution operation is twenty-four bits or more (e.g., twenty-seven bits, etc.) by considering a bias and the like.

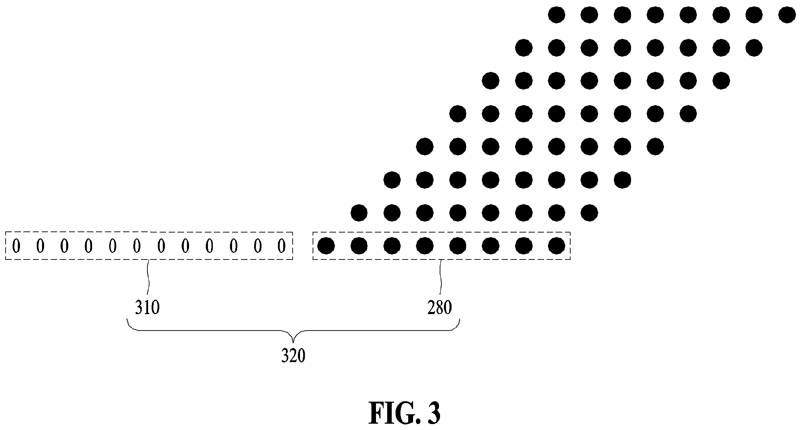

The electronic apparatus 100 may add a first sequence to the partial sum 280 (e.g., the result obtained by multiplying the input feature value X₁₁ 201 by a sign bit of the weight value W₁₁ 202) to expand the partial sum 280 in order to generate an expanded partial sum 320. For example, the electronic apparatus 100 may expand the partial sum 280 such that the length of the expanded partial sum matches a predicted bitwidth. For example, in the electronic apparatus 100, the MSB of the partial sum 280 may be in the 2¹⁴ place, so the bitwidth of the partial sum 280 may be fifteen bits. The electronic apparatus 100 may add the first sequence including a plurality (e.g., nine) of zeroes ("0s") to the partial sum 280 such that the bitwidth of the expanded partial sum 280 is greater than or equal to the predicted bitwidth (twenty-four bits). FIG. 3 illustrates an example in which the electronic apparatus 100 expands the partial sum 280 by adding a first sequence 310 including twelve zeros ("0s") to the partial sum 280, for ease of description.

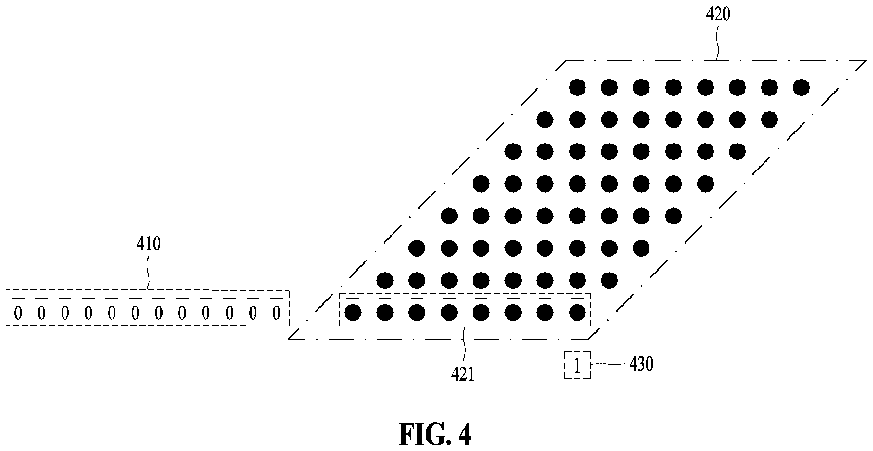

The electronic apparatus 100 may invert an expanded partial sum 320, which is determined by adding the first sequence 310 to the partial sum 280. Inversion may include, for example, a NOT operation. When a zero ("0") is inverted (or a NOT operation is performed on a value zero ("0')), the zero ("0") may be converted to a one ("1"). When a one ("1") is inverted (or a NOT operation is performed on a one ("1")), the one ("1") may be converted to a zero ("0"). In the example shown in FIG. 4, the symbol 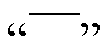 may represent an inversion symbol (or, for example, a NOT operation symbol).

FIG. 4 illustrates an inverted first sequence 410 and an inverted partial sum 421. The inverted first sequence 410 may correspond to a sequence including 12 ones ("1s", and the inverted partial sum 421 may correspond to a result of inverting the partial sum 280. The electronic apparatus 100 may invert the expanded partial sum 320 and add a one ("1") 430 to the resulting inverted sum. The one ("1") 430 may correspond to the value in the 2⁷ place. The process in which the electronic apparatus 100 may invert the expanded partial sum 320 and adds one ("1") 430 to the expanded partial sum 320, which is inverted, may be similar to or substantially the same as the process in which the electronic apparatus 100 obtains a two's complement of the expanded partial sum 320. For example, when an input feature value is A and a sign bit is one ("1"), the product of the input feature value and the sign bit may be -A. The electronic apparatus 100 may calculate the two's complement of A to represent -A. The two's complement of A may be calculated by calculating the one's complement of A and adding one ("1") to the one's complement of A. The one ("1") 430 described above may correspond to the one ("1") that is added in the process of obtaining the two's complement of the expanded partial sum 320. When the sign bit is zero ("0"), the product of the input feature value and the sign bit may be zero ("0"). Because the two's complement of zero ("0") is zero ("0"), when the sign bit is zero ("0"), the electronic apparatus 100 may invert the result (e.g., zero ("0")) of multiplying the input feature value by the sign bit, add one ("1") to the inverted result, and perform operations described below.

In the example shown in FIG. 4, partial sums 420 may include the inverted partial sum 421 and the plurality of partial sums (e.g., the partial sum 210 to the partial sum 270) described with reference to FIG. 2.

The description of the operation, provided with reference to FIGS. 2 to 4, in which the electronic apparatus 100 may process (e.g., expand, invert, and add one ("1")) the partial sum 280 corresponding to the result obtained by multiplying the input feature value X₁₁ by the sign bit of the weight value W₁₁ may apply to an operation in which the electronic apparatus 100 processes a partial sum corresponding to the result obtained by multiplying another input feature value by the sign bit of another weight value.

The electronic apparatus 100 may generate 144 ones ("1s") corresponding to the 2⁷ place and generate 144 sequences (each of which may be referred to as a "second sequence"), each including a plurality (e.g., twelve) of ones ("1s") by processing a partial sum corresponding to the result obtained by multiplying each input feature value by the sign bit of each weight value.

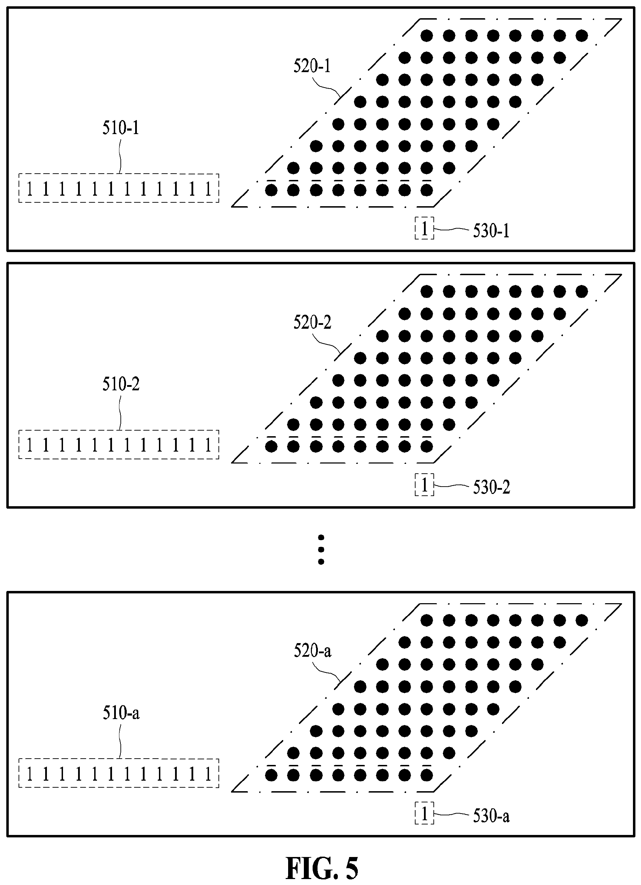

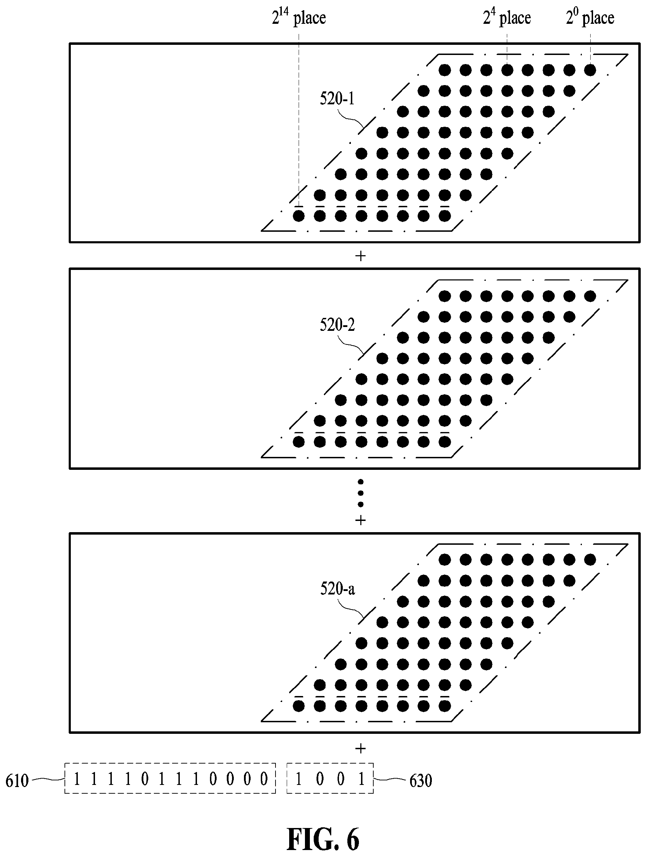

The electronic apparatus 100 may sum the generated ones ("1s") and sum the generated second sequences. In the example shown in FIG. 5, the electronic apparatus 100 may sum second sequences 510-1 to 510-a and sum 1s 530-1 to 530-a. As described with reference to FIGS. 2 to 4, when the 3×3×16 filter is used, the electronic apparatus 100 may sum 144 second sequences 510-1 to 510-a and sum 144 ones ("1s") 530-1 to 530-a. The sum of the second sequences 510-1 to 510-a and the sum of 1s 530-1 to 530-a are illustrated in FIG. 6.

In the example shown in FIG. 6, bits 610 (e.g., "1 1 1 1 0 1 1 1 0 0 0 0") may represent the sum of the second sequences 510-1 to 510-a and bits 630 (e.g., "1 0 0 1") may represent the sum of the ones ("1s") 530-1 to 530-a. In the bits 610, the bit value of each of the 2¹⁹ to 2²¹ and 2²³ to 2²⁶ places may correspond to a one ("1"). In the bits 630, the bit value of each of the 2¹¹ place and the 2¹⁴ place may correspond to a one ("1").

The electronic apparatus 100 may sum the partial sums 520-1 to 520-a (which may, for example, correspond to the partial sums 420) and the bits 610 and the bits 630. The bits 610 and the bits 630 may correspond to bits for processing sign extension, for example. As described above, each of the partial sums 520-1 to 520-a may include a result of inverting a partial sum corresponding to a result obtained by multiplying each input feature value by a sign bit of each weight value.

The electronic apparatus 100 may sum the partial sums 520-1 to 520-a and the bits 610 and 630 using a compressor tree circuit. According to an embodiment, the compressor tree circuit may include a plurality of first compressors and a plurality of second compressors. A first compressor (e.g., a 3-to-2 compressor) may include a full adder and may generate two outputs (e.g., sum and carry-out bits) based on three inputs (e.g., two bits and a carry-in bit). A second compressor (e.g., a 2-to-2 compressor) may include a half adder and may generate two outputs based on two inputs (e.g., two bits).

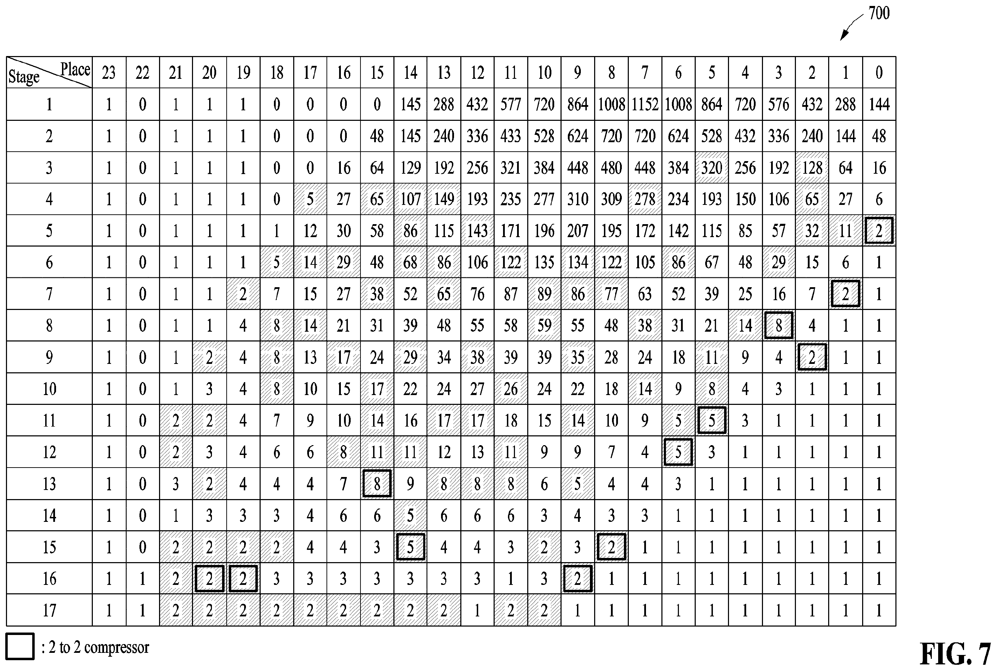

An example of a compressor tree circuit according to an embodiment is described with reference to FIGS. 7 to 9.

FIGS. 7 to 9 are diagrams illustrating the compressor tree circuit according to an embodiment.

The compressor tree circuit may include a plurality of stages. The stages of the compressor tree circuit may include one or more first compressors. The last stage (e.g., stage 17 in FIG. 7) of the compressor tree circuit may include a multi-bit adder. Some of the stages of the compressor tree circuit may include one or more second compressors in addition to one or more first compressors.

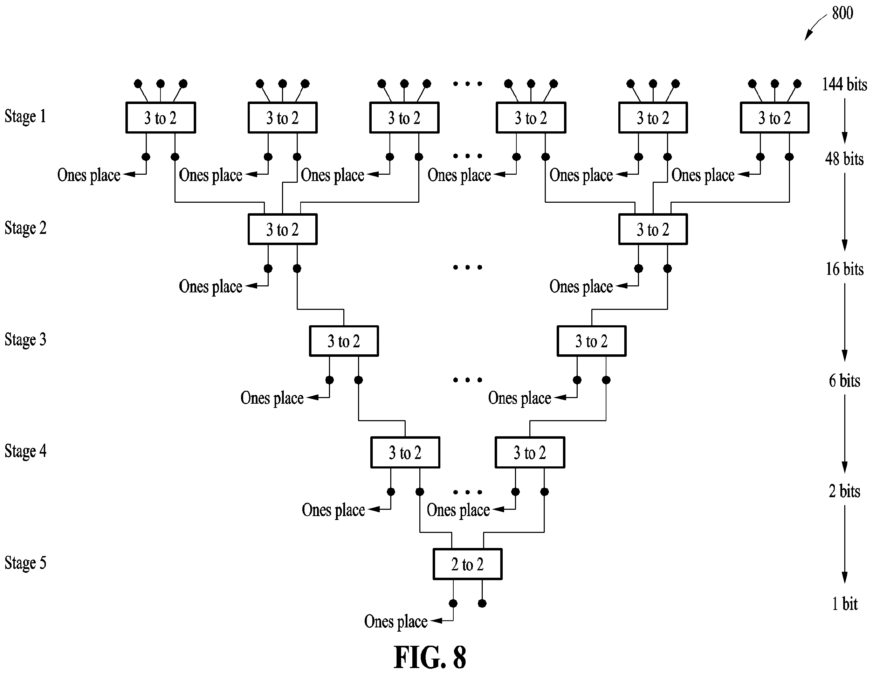

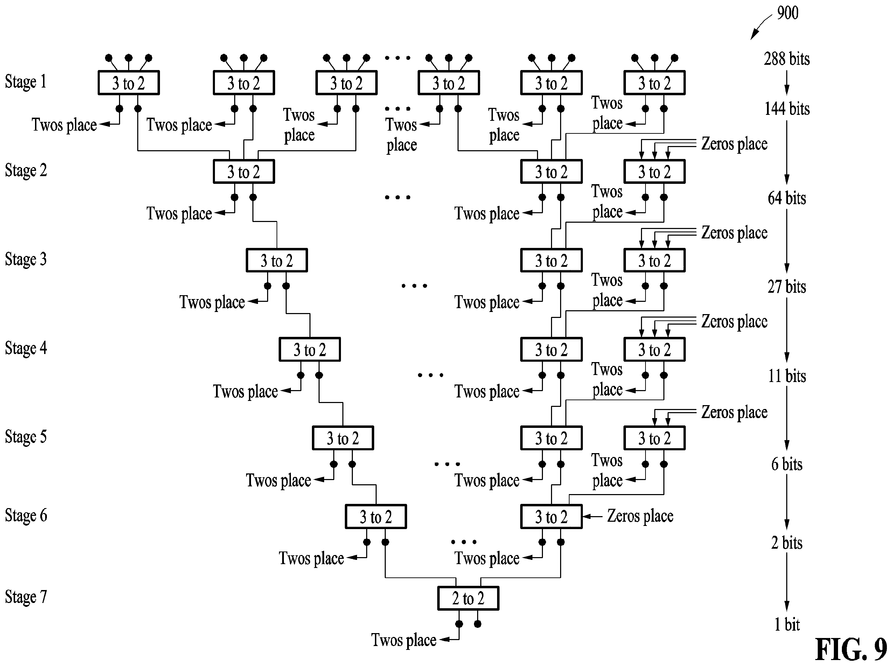

The compressor tree circuit may receive, at stage 1, the partial sums 520-1 to 520-a and the bits 610 and 630 (hereinafter, referred to as "input data") described with reference to FIG. 6. For example, as recorded in the cell corresponding to stage 1 and place 0 in a table 700 of FIG. 7, the compressor tree circuit may receive, at stage 1, 144 bits corresponding to the 2⁰ place (e.g., place 0) of the input data. Compressors 800 corresponding to the 2⁰ place (e.g., place 0) of the compressor tree circuit are illustrated in FIG. 8. In the example shown in FIG. 8, a plurality of first compressors (e.g., 48 (=144/3) first compressors) at stage 1 may receive 144 bits corresponding to the 2⁰ place (e.g., place 0) of the input data. In FIG. 8, the ones ("1s") place may correspond to the 2¹ place. As recorded in the item of stage 1 and place 1 in the table 700 in FIG. 7, the compressor tree circuit may receive, at stage 1, 288 bits corresponding to the 2¹ place (e.g., place 1) of the input data. Examples of compressors 900 corresponding to the 2¹ place (e.g., place 1) of the compressor tree circuit are illustrated in FIG. 9. In the example shown in FIG. 9, a plurality of first compressors (e.g., 96 (=288/3) first compressors) at stage 1 may receive 288 bits corresponding to the 2¹ place (e.g., place 1) of the input data. In FIG. 9, the zeros ("0s") place may represent the 2⁰ place and the twos ("2s") place may represent the 2² place.

The compressor tree circuit may perform an operation at each stage. At stage 17, the compressor tree circuit may obtain a value (e.g., an output feature value) corresponding to the result of a convolution operation between input feature values and weight values by summing bits of places (e.g., 2⁰ place (e.g., place 0) to 2²³ place (e.g., place 23)) through the multi-bit adder.

According to embodiments, the items with bold borders in the table 700 of FIG. 7 may indicate that one or more second compressors are used. For example, the value two ("2") recorded in the cell corresponding to stage 5 and place 0 may indicate that one second compressor receives two bits. The value eight ("8") recorded in the cell corresponding to stage 8 and place 3 may indicate that four second compressors receive eight bits. The value five ("5") recorded in the cell corresponding to stage 11 and place 5 may indicate that two second compressors receive four out of five bits. In this case, the remaining one bit of the five bits may be transmitted to stage 12. The remaining cells other than the cells with bold borders and the cells with numbers less than 3 in the table 700 of FIG. 7 may indicate that a first compressor is used.

According to a comparative example, some implementations of a compressor tree circuit may include a Wallace tree circuit and an adder tree circuit. Table 1 compares examples of the compressor tree circuit including the Wallace tree circuit and the adder tree circuit with the compressor tree circuit according to an embodiment.

**[Table 1]**

| | Compressor tree circuit according to a comparative example | Compressor tree circuit according to an embodiment | Decline rate |
|---|---|---|---|
| Number of flip-flops | 5652 | 2333 | 58.7% |
| Sum of the number of full adders and the number of half adders | 11066 | 9193 | 16.9% |
| Number of pipeline stages | 6 | 5 | 16.7% |

In contrast with the comparative example discussed above, the compressor tree circuit according to an embodiment may include fewer flip-flops and may include fewer adders. Additionally, the number of pipeline stages may be less in the compressor tree circuit according to an embodiment than in the compressor tree circuit according to the comparative example. In general, a flip-flop may consume a relatively large amount of power, but the compressor tree circuit according to an embodiment may include a smaller number of flip-flops, thereby improving power efficiency. Furthermore, the compressor tree circuit according to an embodiment may include a smaller number of adders, thereby reducing an area.

Moreover, in terms of power per cell area, the compressor tree circuit according to the comparative example may have a total power of 80 milliwatts (mW) or more when the frequency is 300 megahertz (MHz), but the compressor tree circuit according to an embodiment may have a total power of less than 80 mW when the frequency is 300 MHz to 400 MHz. Accordingly, the compressor tree circuit according to an embodiment may have various mixable frequencies and may have relatively good power efficiency at the same frequency.

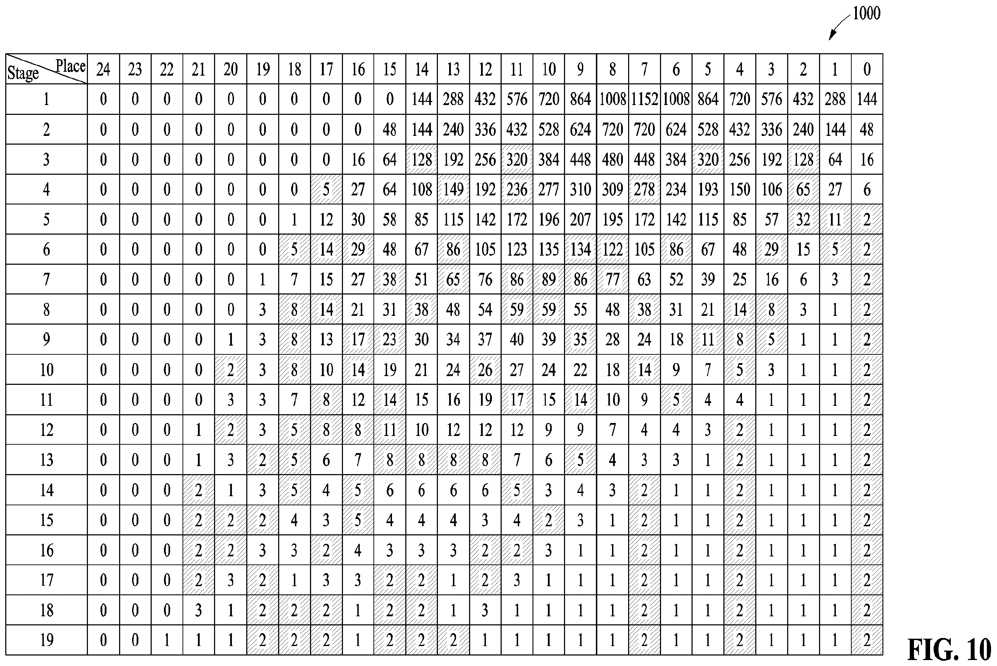

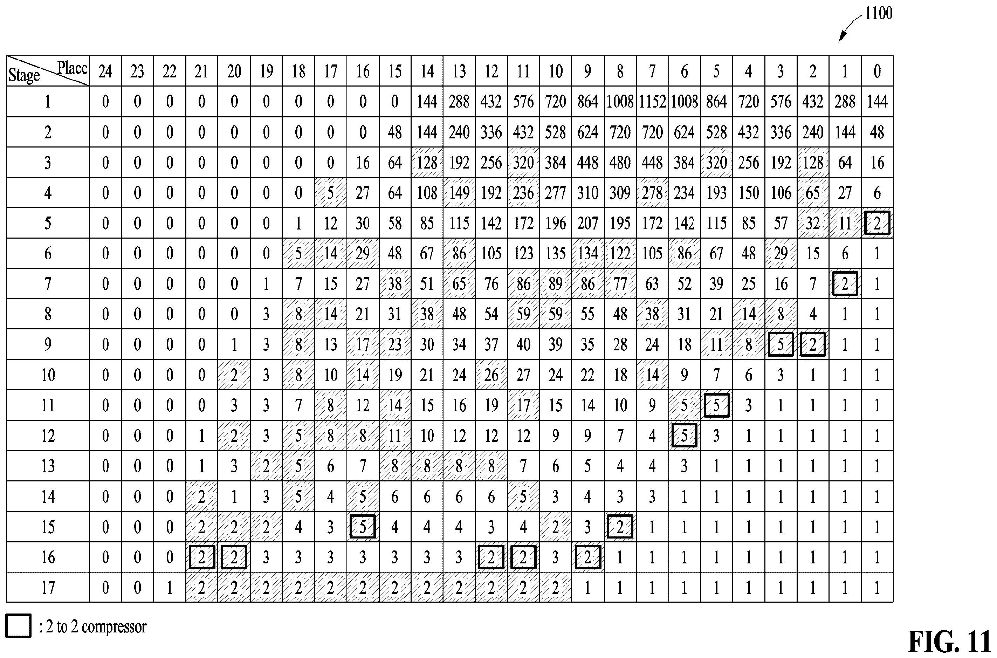

FIGS. 10 and 11 are diagrams illustrating examples of a method of configuring a compressor tree circuit, according to an embodiment.

In the example shown in FIG. 10, the bitwidth of the result of a convolution operation between input feature values and weight values of a 3×3×16 filter may be, for example, twenty-five.

The number of bits in the 2⁰ place (e.g., place 0) to 2¹⁴ place (e.g., place 14) may be 144, 288, 432, 576, 720, 864, 1008, 1152, 1008, 864, 720, 576, 432, 288, and 144, respectively, as shown in the row corresponding to stage 1 in FIG. 10.

At each stage, the number of first compressors for the bits in each place may correspond to the quotient obtained by dividing the number of bits of each place by three ("3"). For example, at stage 1, there may be 144 bits in the 2⁰ place (e.g., place 0), and the number of first compressors for the bits in the 2⁰ place (e.g., place 0) may correspond to the quotient (e.g., forty-eight) obtained by dividing 144 by three. A first compressor may produce two outputs based on three inputs, with one (e.g. a carry-out bit) of the two outputs being transmitted to the 2¹ place of the next stage and the other (e.g. a sum bit) of the two outputs being transmitted to the 2⁰ place of the next stage. The forty-eight first compressors may output ninety-six bits. Of the ninety-six bits, forty-eight bits may be transmitted to 2⁰ place (e.g., place 0) of stage 2 and the remaining forty-eight bits may be transmitted to the 2¹ place (e.g., place 1) of stage 2. At stage 2, there may be forty-eight bits in the 2⁰ place (e.g., place 0). The number of first compressors for the bits in the 2⁰ place (e.g., place 0) may correspond to the quotient (e.g., sixteen) obtained by dividing forty-eight by three. At stage 3, there may be sixteen bits in the 2⁰ place (e.g., place 0). The number of first compressors for the bits in the 2⁰ place (e.g., place 0) may correspond to the quotient (e.g., five) obtained by dividing sixteen by three. At stage 4, there may be six bits in the 2⁰ place (e.g., place 0). The number of first compressors for the bits in the 2⁰ place (e.g., place 0) may correspond to the quotient (e.g., two) obtained by dividing six by three. Similarly, at each stage, the number of first compressors for the bits in each place may be determined.

In the example shown in FIG. 10, among the cells in a table 1000, the shaded cells may have a remainder of two ("2") when the number of bits is divided by three. For example, at stage 5, the number of bits in the 2¹ place (e.g., place 1) may be eleven. When eleven is divided by three, the remainder may be two.

In some embodiments, a first compressor or a second compressor may be used for the shaded items. Accordingly, the total number of first compressors and the total number of second compressors may be combined in various ways. For example, there may be a combination of m first compressors and n second compressors and there may be a combination of m first compressors and n+1 second compressors. There may be conditions for selecting one of various combinations.

For example, a first condition may be a condition for selecting a combination with the maximum number of first compressors, among various combinations. A second condition may be a condition for selecting a combination with the smallest number of second compressors when various combinations have the same number of first compressors. A third condition may be a condition for selecting a combination in which a second compressor is at a later stage, when various combinations have the same number of first compressors and the same number of second compressors. For example, combination A may have m first compressors and n second compressors and combination B may have m first compressors and n second compressors. The number of first compressors in combination A and the number of first compressors in combination B may be the same. The number of second compressors in combination A and the number of second compressors in combination B may also be the same. For combination A, a second compressor may be used at stage 13. For combination B, a second compressor may be used at stage 14. In this case, combination B may be selected.

An example of a combination selected according to the first condition, second condition, or third condition is shown in a table 1100 of FIG. 11. A second compressor may be used for each of the cells with bold borders in the table 1100. For example, the value "5" recorded in the cell corresponding to stage 9 and place 3 may indicate that two second compressors are used.

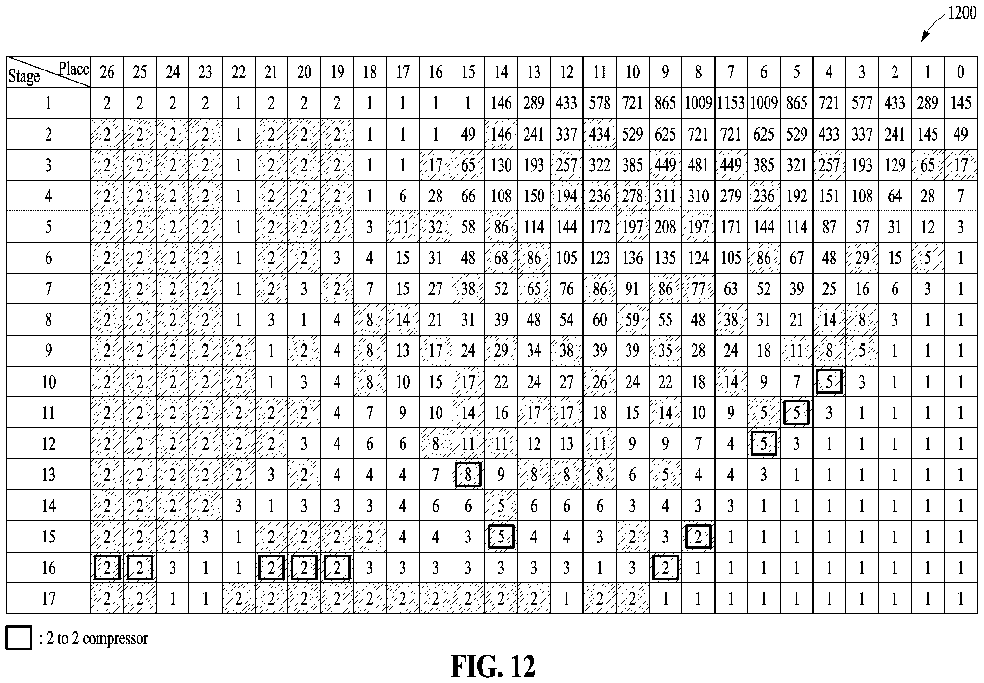

FIG. 12 is a diagram illustrating an example of an operation of an electronic apparatus when a bias or a residual connection of convolution processing is present.

According to an embodiment, a convolution processing process (or a convolution operation process) may have a bias or a residual connection. In this case, at stage 1, the number of bits in each place may increase by one. For example, compared to the example described with reference to FIG. 7, in the example shown in FIG. 12, the number of bits in each place at stage 1 may increase by one. More particularly, the electronic apparatus 100 may sign-extend the bias, and the sign-extended bias and the partial sums 520-1 to 520-a and bits 610 and 630 described with reference to FIG. 6 may be input into a compressor tree circuit. In some embodiments, sign-extending may refer to increasing the number of bits of a binary number while preserving a sign (e.g., positive/negative) and a value of the binary number, however embodiments are not limited thereto. When the residual connection is present, bits input through the residual connection may be input into the compressor tree circuit along with the partial sums 520-1 to 520-a and the bits 610 and 630.

According to an embodiment, compared to the example described with reference to FIG. 7, the number of stages may not change in the example shown in FIG. 12, even when a bias or a residual connection may be present. Accordingly, latency may not increase even when a bias or a residual connection may be present.

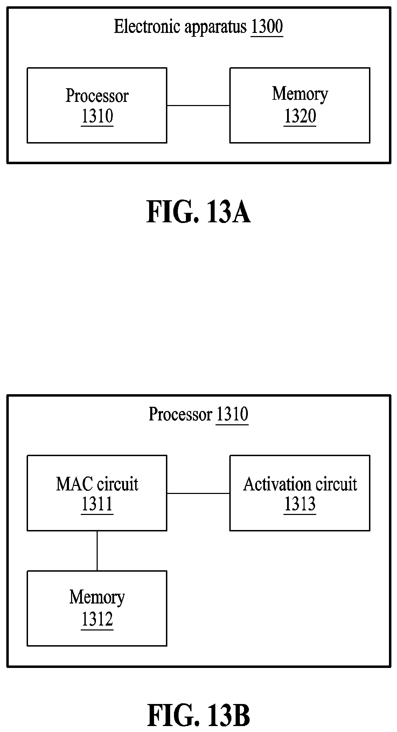

FIGS. 13A and 13B are block diagrams illustrating an electronic apparatus for performing convolution processing, according to an embodiment.

An electronic apparatus 1300 (which may correspond, for example, to the electronic apparatus 100) may include various computing devices, such as a mobile phone, a smartphone, a tablet personal computer (PC), an e-book device, a laptop, a PC, a desktop, a workstation, or a server, various wearable devices, such as a smart watch, smart eyeglasses, a head-mounted display (HMD), or smart clothing, various home appliances such as a smart speaker, a smart television (TV), or a smart refrigerator, and other devices, such as a smart car, a smart kiosk, an Internet of things (IoT) device, a walking assist device (WAD), a drone, or a robot.

Referring to FIG. 13A, the electronic apparatus 1300 may include a processor 1310 and a memory 1320.

The processor 1310 may be, for example, a hardware accelerator and may correspond to a neural processing unit (NPU), a graphics processing unit (GPU), and the like. In some embodiments, the electronic apparatus 1300 may include a host processor (e.g., a central processing unit (CPU)) that may generally control the electronic apparatus 1300. The host processor may receive, from the processor 1310, the execution result of the processor 1310. The host processor may display the received execution result on a display and the like of the electronic apparatus 1300.

The memory 1320 may include, for example, an L2 memory. The memory 1320 may store, for example, an input feature map and a filter. The processor 1310 may receive the input feature map and the filter from the memory 1320 and may perform convolution processing (or a convolution operation) based on the input feature map and the filter.

According to an embodiment, the processor 1310 may include a multiply and accumulation (MAC) circuit 1311, a memory 1312, and an activation circuit 1313, as illustrated in FIG. 13B. The memory 1312 may include, for example, static random access memory (SRAM). The processor 1310 may store the received input feature map and the filter in the memory 1312. The activation circuit 1313 may correspond to a circuit that implements an activation function (or a rectified linear unit (ReLU)) of a CNN.

According to an embodiment, the MAC circuit 1311 may include a compressor tree circuit according to an embodiment. The MAC circuit 1311 may receive input feature values and weight values of a filter from the memory 1312. The MAC circuit 1311 may perform an operation based on the input feature values and the weight values of the filter.

According to an embodiment, the processor 1310 (or the MAC circuit 1311) obtains a plurality of partial sums by multiplying input feature values in a binary form (e.g., the input feature values X₁₁ to X₃₃ in the binary form) respectively by weight values in a binary form (e.g., the weight values of the 3×3×16 filter). Each of the input feature values may correspond to, for example, an unsigned binary number. Each of the weight values may correspond to, for example, a signed binary number.

The processor 1310 inverts first partial sums of the obtained partial sums, the first partial sums corresponding to results obtained by multiplying each of the input feature values by the sign bit of each of the weight values. For example, the processor 1310 inverts first partial sums (e.g., the partial sum 280 of FIG. 3) corresponding to the result obtained by multiplying the input feature value X₁₁ and the sign bit of the weight value W₁₁.

The processor 1310 (or the MAC circuit 1311) obtains an output feature value based on the remaining partial sums (e.g., the remaining partial sums other than the inverted partial sums among the partial sums 520-1 to 520-a in FIG. 6) other than the inverted first partial sums, the inverted first partial sums (e.g., the inverted partial sums in FIG. 6), and bits (e.g., the bits 610 and the bits 630 of FIG. 6). For example, the processor 1310 (or the MAC circuit 1311) may obtain the output feature value by summing the remaining partial sums, the inverted first partial sums, and the bits 610 and the bits 630. In other words, the processor 1310 (or the MAC circuit 1311) may obtain the output feature value by summing the partial sums 520-1 to 520-a and the bits 610 and the bits 630 described with reference to FIG. 6. The obtained output feature value may correspond to the result of a convolution operation between the input feature values and the weight values.

According to an embodiment, the remaining partial sums other than the inverted first partial sums, the inverted first partial sums, and the bits 610 and the bits 630 may correspond to an input of a first stage (e.g., stage 1 described with reference to FIG. 7) of the MAC circuit 1311 (or a compressor tree circuit).

According to an embodiment, the processor 1310 predicts the bitwidth of the result of the convolution operation between the input feature values and the weight values. The processor 1310 expands the first partial sums by adding first sequences (e.g., the first sequence 310 of FIG. 3) respectively to the first partial sums such that the length of each of the expanded first partial sums matches the predicted bitwidth. The processor 1310 converts the added first sequences respectively into second sequences and add a plurality of 1s (e.g., the 1s 530-1 to 530-a of FIG. 5). The processor 1310 may determine the bits 610 and 630 described above based on the second sequences (e.g., the second sequences 510-1 to 510-a of FIG. 5) and the added ones ("1s"). For example, the processor 1310 may determine the bits 610 and 630 including the sum (e.g., 610) of the second sequences and the sum (e.g., 630) of the added ones ("1s").

According to an embodiment, when a bias is present, the processor 1310 may sign-extend the bias. The processor 1310 may obtain the output feature value by summing, through the MAC circuit 1311 (or the compressor tree circuit), the sign-extended bias, the remaining partial sums other than the inverted first partial sums, the inverted first partial sums, and the bits 610 and 630. In this case, the sign-extended bias, the remaining partial sums, the inverted first partial sums, and the bits 610 and 630 may correspond to an input of a first stage (e.g., stage 1 described with reference to FIG. 12) of the compressor tree circuit.

According to an embodiment, the MAC circuit 1311 (or the compressor tree circuit) may include a plurality of first compressors and a plurality of second compressors. Each of the first compressors may generate two outputs based on three inputs. Each of the second compressors may generate two outputs based on two inputs.

According to an embodiment, a remainder may be obtained by dividing the number of bits corresponding to the first place of a first stage. Based on the remainder being not equal to two ("2"), a number of first compressors equal to the quotient obtained by dividing the number of bits by three may be used for the first place of the first stage. When the remainder is equal to two ("2"), at least one first compressor or at least one second compressor may be optionally used. For example, in the example shown in FIG. 7, the number of bits corresponding to the 2³ place (e.g., place 3) of stage 4 may be 106. When 106 is divided by three, the remainder may be one ("1") and the quotient may be thirty-five ("35"). In this case, thirty-five first compressors may be used for the 2³ place (e.g., place 3) of stage 4. In the example shown in FIG. 7, the number of bits corresponding to the 2¹ place (e.g., place 1) of stage 5 may be eleven. When eleven is divided by three, the remainder may be two ("2") and the quotient may be three ("3"). In this case, three first compressors may be used for the 2¹ place (e.g., place 1) of stage 5. In some embodiments, when eleven is divided by two, the remainder may be one ("1") and the quotient may be five ("5"), and five second compressors may be used for the 2¹ place (e.g., place 1) of stage 5. For optimization purposes, three first compressors may be used rather than five second compressors for the 2¹ place (e.g., place 1) of stage 5.

According to an implementation, when the remainder is equal to two ("2"), first and second compressors may not be used.

According to an embodiment, when a bias or a residual input (e.g., an input through a residual connection) is present in a convolution operation, the MAC circuit 1311 may process the bias or the residual input.

According to an embodiment, even when a bias or a residual input is present in the convolution operation, the MAC circuit 1311 (or the compressor tree circuit) may process the bias or the residual input without increasing the number of stages. For example, when comparing the example described with reference to FIG. 12 with the example described with reference to FIG. 7, the total number of stages may be the same at seventeen, so when a bias is present, the bias may be processed without increasing the number of stages.

The operation of the electronic apparatus 100 described with reference to FIGS. 1 to 12 may apply to the electronic apparatus 1300 described with reference to FIG. 13.

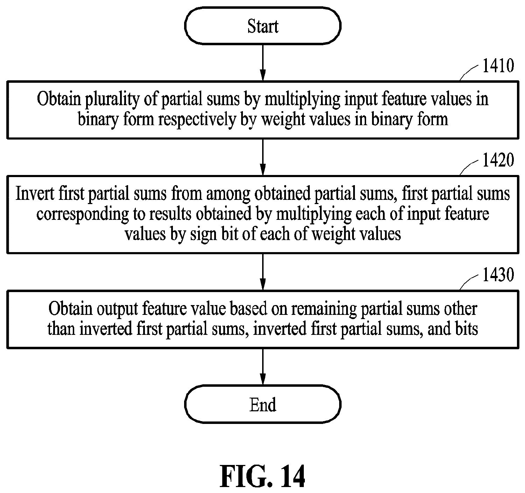

FIG. 14 is a flowchart illustrating a convolution processing method of an electronic apparatus, according to an embodiment.

Referring to FIG. 14, in operation 1410, the electronic apparatus 1300 obtains a plurality of partial sums by multiplying input feature values in the binary form respectively by weight values in a binary form.

In operation 1420, the electronic apparatus 1300 inverts first partial sums from among the obtained partial sums, wherein the first partial sums correspond to the results obtained by multiplying each of the input feature values by the sign bit of each of the weight values.

In operation 1430, the electronic apparatus 1300 obtains an output feature value based on the remaining partial sums other than the inverted first partial sums, the inverted first partial sums, and the bits 610 and 630. For example, the electronic apparatus 1300 may obtain the output feature value by summing the remaining partial sums, the inverted first partial sums, and the bits 610 and the bits 630. In this case, the remaining partial sums, the inverted first partial sums, and the bits 610 and the bits 630 may be included in an input of the first stage of a compressor tree circuit. In embodiments, the bits 610 and the bits 630 may be referred to as additional bits.

According to an embodiment, the electronic apparatus 1300 predicts the bitwidth of the result of the convolution operation between the input feature values and the weight values. The electronic apparatus 1300 expands the first partial sums by adding first sequences respectively to the first partial sums. The electronic apparatus 130C expands the first partial sums such that the length of each of the expanded first partial sums matches the predicted bitwidth. The electronic apparatus 1300 converts the added first sequences respectively into second sequences and add a plurality of ones ("1s"). The electronic apparatus 1300 may determine the bits 610 and the bits 630 based on the second sequences and the added ones ("1s"). The bits 610 and the bits 630 may include, for example, the sum of the second sequences and the sum of the added ones ("1s").

According to an embodiment, when a bias is present, the electronic apparatus 1300 may sign-extend the bias. In operation 1430, the electronic apparatus 1300 may obtain the output feature value by summing, through the compressor tree circuit, the sign-extended bias, the remaining partial sums, the inverted first partial sums, and the bits 610 and 630. In this case, the sign-extended bias, the remaining partial sums, the inverted first partial sums, and the bits 610 and 630 may be included in the input of the first stage of the compressor tree circuit.

According to an embodiment, the electronic apparatus 1300 may multiply an unsigned multiplicand by a signed multiplier. In this case, the results (e.g., the partial sum 210 to partial sum 270 of FIG. 2) obtained by multiplying a multiplicand by each of the bits other than a sign bit may be a positive. Therefore, the electronic apparatus 1300 may not sign-extend each of the results (e.g., the partial sum 210 to partial sum 270 of FIG. 2). The result (e.g., the partial sum 270) obtained by multiplying the multiplicand by the sign bit may be negative or zero ("0"). The electronic apparatus 1300 may perform a process of obtaining the two's complement of the result (e.g., the partial sum 270) of multiplying the multiplicand by the sign bit, may not perform sign-extension, and may sum ones ("1s") (e.g., the ones ("1s") 530-1 to 530-a) in advance before summing partial sums (e.g., the partial sums 520-1 to 520-a). Accordingly, the electronic apparatus 1300 may reduce the number of operations of the convolution operation.

The description provided with reference to FIGS. 1 to 13 may apply to the convolution processing method described with reference to FIG. 14.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device may also access, store, manipulate, process, and create data in response to execution of the software. For purpose of simplicity, the description of a processing device is singular; however, one of ordinary skill in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or one or more combinations thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as floptical disks; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

## Claims

1. A convolution processing method performed by at least one processor included in an electronic apparatus, the convolution processing method comprising:
obtaining (1410) a plurality of partial sums by multiplying a plurality of input feature values in a binary form by a plurality of weight values in the binary form, wherein each partial sum is a result obtained by multiplying an input feature value and a bit of a corresponding weight value;
predicting a bitwidth of a result of a convolution operation between the plurality of input feature values and the plurality of weight values;
expanding a plurality of first partial sums from among the plurality of partial sums to obtain expanded first partial sums, by adding a plurality of first sequences to the plurality of first partial sums such that a length of each expanded first partial sum from among the plurality of expanded first partial sums matches the predicted bitwidth;
wherein the plurality of first partial sums correspond to results obtained by multiplying each input feature value from among the plurality of input feature values by a sign bit corresponding to each weight value from among the plurality of weight values;
inverting (1420) the expanded first partial sums to convert the plurality of first sequences into a plurality of second sequences and the plurality of first partial sums into a plurality of inverted first partial sums;
generating a plurality of ones ("1s") by, for each inverted expanded first partial sum, generating a one corresponding to adding one to the inverted expanded first partial sum;
determining additional bits comprising a sum of the second sequences and a sum of the plurality of ones ("1s"); and
obtaining (1430) an output feature value by summing the inverted first partial sums, the additional bits, and, remaining partial sums other than the inverted first partial sums.

2. The convolution processing method of claim 1, wherein the output feature value is obtained using a compressor tree circuit.

3. The convolution processing method of claim 2, wherein the remaining partial sums, the inverted first partial sums, and the additional bits are included in an input of a first stage of the compressor tree circuit.

4. The convolution processing method of claim 2, further comprising:
based on a bias being present, sign-extending the bias,
wherein the output feature value is obtained by summing, using the compressor tree circuit, the sign-extended bias, the remaining partial sums, the inverted first partial sums, and the additional bits, and
preferably, wherein the sign-extended bias, the remaining partial sums, the inverted first partial sums, and the additional bits are included in a first stage of the compressor tree circuit.

5. The convolution processing method of any one of claims 2-4, wherein the compressor tree circuit comprises a plurality of first compressors and a plurality of second compressors,
wherein each first compressor from among the plurality of first compressors is configured to generate two outputs based on three inputs,
wherein each second compressor from among the plurality of second compressors is configured to generate two outputs based on two inputs, and
optionally, wherein a remainder is obtained by dividing a number of bits corresponding to a first place of a first stage, wherein based on the remainder being not equal to two ("2"), a number of the plurality of first compressors equal to a quotient obtained by dividing the number of bits by three ("3") are used for the first place of the first stage, and based on the remainder being equal to two ("2"), at least one first compressor or at least one second compressor is used.

6. The convolution processing method of any one of claims 2-5, wherein, based on at least one from among a bias and a residual input being present in a convolution operation, the at least one from among the bias and the residual input is processed by the compressor tree circuit.

7. An electronic apparatus (1300) comprising:
a memory (1320); and
at least one processor (1310) operatively connected to the memory (1320) and configured to:
obtain a plurality of partial sums (210-280) by multiplying a plurality of input feature values (201) in a binary form by a plurality of weight values (202) in the binary form, wherein each partial sum (210-280) is a result obtained by multiplying an input feature value (201) and a bit of a corresponding weight value (202),
predict a bitwidth of a result of a convolution operation between the plurality of input feature values (201) and the plurality of weight values (202),
expand a plurality of first partial sums (280) from among the obtained plurality of partial sums (210-280) to obtain expanded first partial sums (320), by adding a plurality of first sequences (310) to the plurality of first partial sums (280) such that a length of each expanded first partial sum (320) from among the plurality of expanded first partial sums matches the predicted bitwidth,
wherein the plurality of first partial sums (280) correspond to results obtained by multiplying each input feature value from among the plurality of input feature values by a sign bit corresponding to each weight from among the plurality of the weight values,
invert the expanded first partial sums (320) to convert the plurality of first sequences (310) into a plurality of second sequences (410) and the plurality of first partial sums (280) into a plurality of inverted first partial sums (421),
generate a plurality of ones ("1s") (430) by, for each inverted expanded first partial sum (410, 421), generating a one corresponding to adding one to the inverted expanded first partial sum (410, 421);
determine additional bits comprising a sum of the second sequences (610) and a sum of the plurality of ones ("1s") (630), and
obtain an output feature value by summing the inverted first partial sums, the additional bits, and remaining partial sums other than the inverted first partial sums.

8. The electronic apparatus of claim 7, wherein the at least one processor comprises a compressor tree circuit.

9. The electronic apparatus of claim 8, wherein the remaining partial sums, the inverted first partial sums, and the additional bits are included in an input of a first stage of the compressor tree circuit.

10. The electronic apparatus of claim 8, wherein the at least one processor is further configured to, based on a bias being present, sign-extend the bias and obtain the output feature value by summing, using the compressor tree circuit, the sign-extended bias, the remaining partial sums, the inverted first partial sums, and the additional bits; and
preferably, wherein the sign-extended bias, the remaining partial sums, the inverted first partial sums, and the additional bits are included in a first stage of the compressor tree circuit.

11. The electronic apparatus of any one of claims 8-10, wherein a remainder is obtained by dividing a number of bits corresponding to a first place of a first stage,
wherein the compressor tree circuit comprises a plurality of first compressors and a plurality of second compressors,
wherein based on the remainder being not equal to two ("2"), a number of the plurality of first compressors equal to a quotient obtained by dividing the number of bits by three ("3") are used for the first place of the first stage, and
wherein based on the remainder being equal to two ("2"), at least one first compressor or at least one second compressor is used.

## Patentansprüche

1. Verfahren zur Faltungsverarbeitung, das von zumindest einem in einer elektronischen Vorrichtung enthaltenen Prozessor durchgeführt wird, wobei das Verfahren zur Faltungsverarbeitung Folgendes umfasst:
Erhalten (1410) einer Vielzahl von Teilsummen durch Multiplizieren einer Vielzahl von Eingangsmerkmalswerten in einer binären Form mit einer Vielzahl von Gewichtungswerten in der binären Form, wobei jede Teilsumme ein Ergebnis ist, das durch Multiplizieren eines Eingangsmerkmalswerts und eines Bits eines entsprechenden Gewichtungswerts erhalten wird;
Vorhersagen einer Bitbreite eines Ergebnisses einer Faltungsoperation zwischen der Vielzahl von Eingangsmerkmalswerten und der Vielzahl von Gewichtungswerten;
Erweitern einer Vielzahl von ersten Teilsummen aus der Vielzahl von Teilsummen, um erweiterte erste Teilsummen zu erhalten, durch Addieren einer Vielzahl von ersten Sequenzen zu der Vielzahl von ersten Teilsummen, so dass eine Länge jeder erweiterten ersten Teilsumme aus der Vielzahl von erweiterten ersten Teilsummen mit der vorhergesagten Bitbreite übereinstimmt;
wobei die Vielzahl von ersten Teilsummen Ergebnissen entspricht, die durch Multiplizieren jedes Eingangsmerkmalswertes aus der Vielzahl von Eingangsmerkmalswerten mit einem Vorzeichenbit, das jedem Gewichtungswert aus der Vielzahl von Gewichtungswerten entspricht, erhalten werden;
Umkehren (1420) der erweiterten ersten Teilsummen, um die Vielzahl von ersten Sequenzen in eine Vielzahl von zweiten Sequenzen umzuwandeln und die Vielzahl von ersten Teilsummen in eine Vielzahl von umgekehrten ersten Teilsummen umzuwandeln;
Erzeugen einer Vielzahl von Einsen ("1en"), indem für jede umgekehrte erweiterte erste Teilsumme eine Eins erzeugt wird, die dem Addieren einer Eins zu der umgekehrten erweiterten ersten Teilsumme entspricht;
Bestimmen zusätzlicher Bits, die eine Summe der zweiten Sequenzen und eine Summe der Vielzahl von Einsen ("1en") umfassen; und
Erhalten (1430) eines Ausgabemerkmalswertes durch Summieren der umgekehrten ersten Teilsummen, der zusätzlichen Bits und der verbleibenden Teilsummen, bei denen es sich nicht um die umgekehrten ersten Teilsummen handelt.

2. Verfahren zur Faltungsverarbeitung nach Anspruch 1, wobei der Ausgabemerkmalswert unter Verwendung einer Kompressorbaumschaltung erhalten wird.

3. Verfahren zur Faltungsverarbeitung nach Anspruch 2, wobei die verbleibenden Teilsummen, die umgekehrten ersten Teilsummen und die zusätzlichen Bits in einem Eingang einer ersten Stufe der Kompressorbaumschaltung enthalten sind.

4. Verfahren zur Faltungsverarbeitung nach Anspruch 2, das ferner Folgendes umfasst:
basierend darauf, dass ein Bias-Wert vorhanden ist, Vorzeichenerweitern des Bias-Werts,
wobei der Ausgabemerkmalswert dadurch erhalten wird, dass unter Verwendung der Kompressorbaumschaltung der vorzeichenerweiterte Bias-Wert, die verbleibenden Teilsummen, die umgekehrten ersten Teilsummen und die zusätzlichen Bits summiert werden, und
wobei der vorzeichenerweiterte Bias-Wert, die verbleibenden Teilsummen, die umgekehrten ersten Teilsummen und die zusätzlichen Bits vorzugsweise in einer ersten Stufe der Kompressorbaumschaltung enthalten sind.

5. Verfahren zur Faltungsverarbeitung nach einem der Ansprüche 2 bis 4, wobei die Kompressorbaumschaltung eine Vielzahl von ersten Kompressoren und eine Vielzahl von zweiten Kompressoren umfasst,
wobei jeder erste Kompressor aus der Vielzahl von ersten Kompressoren konfiguriert ist, um zwei Ausgaben basierend auf drei Eingaben zu erzeugen,
wobei jeder zweite Verdichter aus der Vielzahl von zweiten Verdichtern konfiguriert ist, um zwei Ausgaben basierend auf zwei Eingaben zu erzeugen, und
optional, wobei ein Rest erhalten wird, indem eine Anzahl von Bits, die einer ersten Stelle einer ersten Stufe entspricht, dividiert wird, wobei basierend darauf, dass der Rest nicht gleich zwei ("2") ist, eine Anzahl der Vielzahl von ersten Kompressoren, die gleich einem Quotienten ist, der durch Dividieren der Anzahl von Bits durch drei (,3') erhalten wird, für die erste Stelle der ersten Stufe verwendet wird, und basierend darauf, dass der Rest gleich zwei ("2") ist, zumindest ein erster Kompressor oder zumindest ein zweiter Kompressor verwendet wird.

6. Verfahren zur Faltungsverarbeitung nach einem der Ansprüche 2 bis 5, wobei basierend darauf, dass ein Bias-Wert und/oder eine Resteingabe in einer Faltungsoperation vorhanden ist, der Bias-Wert und/oder die Resteingabe durch die Kompressorbaumschaltung verarbeitet wird.

7. Elektronische Vorrichtung (1300), die Folgendes umfasst:
einen Speicher (1320); und
zumindest einen Prozessor (1310), der betriebsmäßig mit dem Speicher (1320) verbunden ist und zu Folgendem konfiguriert ist:
Erhalten einer Vielzahl von Teilsummen (210-280) durch Multiplizieren einer Vielzahl von Eingangsmerkmalswerten (201) in einer binären Form mit einer Vielzahl von Gewichtungswerten (202) in der binären Form, wobei jede Teilsumme (210-280) ein Ergebnis ist, das durch Multiplizieren eines Eingangsmerkmalswerts (201) und eines Bits eines entsprechenden Gewichtungswerts (202) erhalten wird,
Vorhersagen einer Bitbreite eines Ergebnisses einer Faltungsoperation zwischen der Vielzahl von Eingangsmerkmalwerten (201) und der Vielzahl von Gewichtungswerten (202),
Erweitern einer Vielzahl von ersten Teilsummen (280) aus der Vielzahl von erhaltenen Teilsummen (210-280), um expandierte erste Teilsummen (320) zu erhalten, durch Addieren einer Vielzahl von ersten Sequenzen (310) zu der Vielzahl von ersten Teilsummen (280), so dass eine Länge jeder expandierten ersten Teilsumme (320) aus der Vielzahl von expandierten ersten Teilsummen mit der vorhergesagten Bitbreite übereinstimmt,
wobei die Vielzahl von ersten Teilsummen (280) Ergebnissen entspricht, die durch Multiplizieren jedes Eingangsmerkmalswertes aus der Vielzahl von Eingangsmerkmalswerten mit einem Vorzeichenbit, das jedem Gewichtungswert aus der Vielzahl von Gewichtungswerten entspricht, erhalten werden,
Umkehren der erweiterten ersten Teilsummen (320), um die Vielzahl von ersten Sequenzen (310) in eine Vielzahl von zweiten Sequenzen (410) umzuwandeln und die Vielzahl von ersten Teilsummen (280) in eine Vielzahl von umgekehrten ersten Teilsummen (421) umzuwandeln,
Erzeugen einer Vielzahl von Einsen ("1en") (430), indem für jede umgekehrte erweiterte erste Teilsumme (410, 421) eine Eins erzeugt wird, die dem Addieren einer Eins zu der umgekehrten erweiterten ersten Teilsumme (410, 421) entspricht,
Bestimmen zusätzlicher Bits, die eine Summe der zweiten Sequenzen (610) und eine Summe der Vielzahl von Einsen ("1en") (630) umfassen, und
Erhalten eines Ausgabemerkmalswertes durch Summieren der umgekehrten ersten Teilsummen, der zusätzlichen Bits und der verbleibenden Teilsummen, bei denen es sich nicht um die umgekehrten ersten Teilsummen handelt.

8. Elektronische Vorrichtung nach Anspruch 7, wobei der mindestens eine Prozessor eine Kompressorbaumschaltung umfasst.

9. Elektronische Vorrichtung nach Anspruch 8, wobei die verbleibenden Teilsummen, die umgekehrten ersten Teilsummen und die zusätzlichen Bits in einem Eingang einer ersten Stufe der Kompressorbaumschaltung enthalten sind.

10. Elektronische Vorrichtung nach Anspruch 8, wobei der mindestens eine Prozessor ferner so konfiguriert ist, dass er basierend darauf, dass ein Bias-Wert vorhanden ist, den Bias-Wert vorzeichenerweitert und den Ausgangsmerkmalwert erhält, indem er unter Verwendung der Kompressorbaumschaltung den vorzeichenerweiterte Bias-Wert, die verbleibenden Teilsummen, die umgekehrten ersten Teilsummen und die zusätzlichen Bits summiert; und
wobei der vorzeichenerweiterte Bias-Wert, die verbleibenden Teilsummen, die umgekehrten ersten Teilsummen und die zusätzlichen Bits vorzugsweise in einer ersten Stufe der Kompressorbaumschaltung enthalten sind.

11. Elektronische Vorrichtung nach einem der Ansprüche 8 bis 10, wobei ein Rest erhalten wird, indem eine Anzahl von Bits dividiert wird, die einer ersten Stelle einer ersten Stufe entspricht,
wobei die Kompressorbaumschaltung eine Vielzahl von ersten Kompressoren und eine Vielzahl von zweiten Kompressoren umfasst,
wobei basierend darauf, dass der Rest nicht gleich zwei ("2") ist, eine Anzahl der Vielzahl von ersten Kompressoren, die gleich einem Quotienten ist, der durch Dividieren der Anzahl von Bits durch drei ("3") erhalten wird, für die erste Stelle der ersten Stufe verwendet wird, und
wobei basierend darauf, dass der Rest gleich zwei ("2") ist, zumindest ein erster Kompressor oder zumindest ein zweiter Kompressor verwendet wird.

## Revendications

1. Procédé de traitement par convolution mis en œuvre par au moins un processeur présent dans un appareil électronique, ledit procédé de traitement par convolution comprenant les étapes consistant à :
obtenir (1410) une pluralité de sommes partielles par multiplication d'une pluralité de valeurs caractéristiques d'entrée sous forme binaire par une pluralité de valeurs de pondération sous forme binaire, chaque somme partielle étant un résultat obtenu par multiplication d'une valeur caractéristique d'entrée et d'un bit d'une valeur de pondération correspondante ;
prédire la largeur de bit du résultat d'une opération de convolution entre la pluralité de valeurs caractéristiques d'entrée et la pluralité de valeurs de pondération ;
étendre une pluralité de premières sommes partielles parmi la pluralité de sommes partielles pour obtenir des premières sommes partielles étendues, par ajout d'une pluralité de premières séquences à la pluralité de premières sommes partielles de façon que la longueur de chaque première somme partielle étendue parmi la pluralité de premières sommes partielles étendues corresponde à la largeur de bit prédite,
ladite pluralité de premières sommes partielles correspondant à des résultats obtenus par multiplication de chaque valeur caractéristique d'entrée parmi la pluralité de valeurs caractéristiques d'entrée par un bit de signe correspondant à chaque valeur de pondération parmi la pluralité de valeurs de pondération ;
inverser (1420) les premières sommes partielles étendues pour convertir la pluralité de premières séquences en une pluralité de deuxièmes séquences et la pluralité de premières sommes partielles en une pluralité de premières sommes partielles inversées ;
générer une pluralité de uns (« 1 ») par, pour chaque première somme partielle étendue inversée, génération d'un 1 correspondant à l'ajout d'un 1 à la première somme partielle étendue inversée ;
déterminer des bits supplémentaires comprenant une somme des deuxièmes séquences et une somme de la pluralité de uns (« 1 ») ; et
obtenir (1430) une valeur caractéristique de sortie par sommation des premières sommes partielles inversées, des bits supplémentaires et des sommes partielles restantes autres que les premières sommes partielles inversées.

2. Procédé de traitement par convolution selon la revendication 1, dans lequel la valeur caractéristique de sortie est obtenue à l'aide d'un circuit en arbre de compression.

3. Procédé de traitement de convolution selon la revendication 2, dans lequel les sommes partielles restantes, les premières sommes partielles inversées et les bits supplémentaires sont présents dans une entrée d'un premier étage du circuit en arbre de compression.

4. Procédé de traitement par convolution selon la revendication 2, comprenant en outre l'opération consistant à :
s'il y a présence d'un biais, effectuer une extension de signe du biais ;
ladite valeur caractéristique de sortie étant obtenue par sommation, à l'aide du circuit en arbre de compression, du biais à extension de signe, des sommes partielles restantes, des premières sommes partielles inversées et des bits supplémentaires, et
le biais à extension de signe, les sommes partielles restantes, les premières sommes partielles inversées et les bits supplémentaires étant de préférence présents dans un premier étage du circuit en arbre de compression.

5. Procédé de traitement par convolution selon l'une quelconque des revendications 2 à 4, dans lequel le circuit en arbre de compression comprend une pluralité de premiers compresseurs et une pluralité de deuxièmes compresseurs ;
chaque premier compresseur parmi la pluralité de premiers compresseurs étant configuré pour générer deux sorties à partir de trois entrées,
chaque deuxième compresseur parmi la pluralité de deuxièmes compresseurs étant configuré pour générer deux sorties à partir de deux entrées, et
étant entendu éventuellement qu'un reste est obtenu par division d'un nombre de bits correspondant à une première place d'un premier étage, et que, si le reste n'est pas égal à deux (« 2 »), un certain nombre de la pluralité de premiers compresseurs qui est égal à un quotient obtenu par division du nombre de bits par trois (« 3 ») est utilisé pour la première place du premier étage, et si le reste est égal à deux (« 2 »), au moins un premier compresseur ou au moins un deuxième compresseur est utilisé.

6. Procédé de traitement de convolution selon l'une quelconque des revendications 2 à 5, dans lequel, si un biais et/ou une entrée résiduelle sont présents dans une opération de convolution, ledit biais et/ou ladite entrée résiduelle est traitée par le circuit en arbre de compression.

7. Appareil électronique (1300) comprenant :
une mémoire (1320), et
au moins un processeur (1310) relié de manière fonctionnelle à la mémoire (1320) et configuré pour :
obtenir une pluralité de sommes partielles (210-280) par multiplication d'une pluralité de valeurs caractéristiques d'entrée (201) sous forme binaire par une pluralité de valeurs de pondération (202) sous forme binaire, chaque somme partielle (210-280) étant un résultat obtenu par multiplication d'une valeur caractéristique d'entrée (201) et d'un bit d'une valeur de pondération (202) correspondante,
prédire la largeur de bit du résultat d'une opération de convolution entre la pluralité de valeurs caractéristiques d'entrée (201) et la pluralité de valeurs de pondération (202),
étendre une pluralité de premières sommes partielles (280) parmi la pluralité de sommes partielles (210-280) obtenues pour obtenir des premières sommes partielles étendues (320), par ajout d'une pluralité de premières séquences (310) à la pluralité de premières sommes partielles (280) de façon que la longueur de chaque première somme partielle étendue (320) parmi la pluralité de premières sommes partielles étendues corresponde à la largeur de bit prédite,
ladite pluralité de premières sommes partielles (280) correspondant à des résultats obtenus par multiplication de chaque valeur caractéristique d'entrée parmi la pluralité de valeurs caractéristiques d'entrée par un bit de signe correspondant à chaque valeur de pondération parmi la pluralité de valeurs de pondération,
inverser les premières sommes partielles étendues (320) pour convertir la pluralité de premières séquences (310) en une pluralité de deuxièmes séquences (410) et la pluralité de premières sommes partielles (280) en une pluralité de premières sommes partielles inversées (421),
générer une pluralité de uns (« 1 ») (430) par, pour chaque première somme partielle étendue inversée (410, 421), génération d'un 1 correspondant à l'ajout d'un 1 à la première somme partielle étendue inversée (410, 421),
déterminer des bits supplémentaires comprenant une somme des deuxièmes séquences (610) et une somme de la pluralité de uns (« 1 ») (630), et
obtenir une valeur caractéristique de sortie par sommation des premières sommes partielles inversées, des bits supplémentaires et des sommes partielles restantes autres que les premières sommes partielles inversées.

8. Appareil électronique selon la revendication 7, dans lequel le ou les processeurs comprennent un circuit en arbre de compression.

9. Appareil électronique selon la revendication 8, dans lequel les sommes partielles restantes, les premières sommes partielles inversées et les bits supplémentaires sont présents dans une entrée d'un premier étage du circuit en arbre de compression.

10. Appareil électronique selon la revendication 8, dans lequel le ou les processeurs sont en outre configurés pour, s'il y a présence d'un biais, effectuer une extension de signe du biais et obtenir la valeur caractéristique de sortie par sommation, à l'aide du circuit en arbre de compression, du biais à extension de signe, des sommes partielles restantes, des premières sommes partielles inversées et des bits supplémentaires, et
le biais à extension de signe, les sommes partielles restantes, les premières sommes partielles inversées et les bits supplémentaires étant de préférence présents dans un premier étage du circuit en arbre de compression.

11. Appareil électronique selon l'une quelconque des revendications 8 à 10, dans lequel un reste est obtenu par division d'un nombre de bits correspondant à une première place d'un premier étage,
dans lequel le circuit en arbre de compression comprend une pluralité de premiers compresseurs et une pluralité de deuxièmes compresseurs,
dans lequel, si le reste n'est pas égal à deux (« 2 »), un certain nombre de la pluralité de premiers compresseurs qui est égal à un quotient obtenu par division du nombre de bits par trois (« 3 ») est utilisé pour la première place du premier étage, et
dans lequel, si le reste est égal à deux (« 2 »), au moins un premier compresseur ou au moins un deuxième compresseur est utilisé.
